# FASCICULE DE BREVET EUROPEEN

(11) **EP 1 270 371 B1**
(45) Date de publication et mention de la délivrance du brevet: **27.04.2005**
(21) Numéro de dépôt: 02291583.9
(22) Date de dépôt: 25.06.2002
(51) Int. Cl.: B62D 6/00

(54) **Procédé d' évaluation de l'adhérence des roues directrices d'un véhicule sur une voie de circulation, et application**
Verfahren zum Schätzen der Haftung der gelenkten Räder eines Fahrzeugs auf einer Fahrbahn und Anwendung dieses Verfahrens
Method for estimating the adherence of the steered wheels of a vehicle on a road surface and its application

(30) Priorité: 26.06.2001 FR 0108415
(43) Date de publication de la demande: 02.01.2003
(73) Titulaire: Peugeot Citroen Automobiles SA, 92200 Neuilly sur Seine (FR)
(72) Inventeur: Bailleux, Francois, 91400 Val d'Albian (FR)
(74) Mandataire: Thinat, Michel

(56) Documents cités:
- EP-A- 0 323 066
- DE-A- 19 823 775
- DE-C- 3 922 528
- US-A- 5 365 439
- US-A- 5 996 724
- US-A- 6 032 757

## Description

La présente invention concerne, de façon générale, les techniques de pilotage des véhicules automobiles.

Plus précisément, l'invention concerne, selon un premier de ses aspects, un procédé d'évaluation de l'adhérence des roues directrices d'un véhicule sur une voie de circulation sur laquelle ce véhicule roule à une vitesse instantanée déterminée, ce véhicule étant piloté au moyen d'un organe de pilotage, tel qu'un volant, adoptant une position instantanée de commande dont dépend une orientation instantanée des roues directrices, cette orientation étant modifiable par application aux roues directrices d'une puissance instantanée de braquage.

En pratique, tous les véhicules automobiles existants dotés de moyens d'évaluation de l'adhérence des roues directrices sur la voie de circulation mettent en oeuvre un procédé qui répond à cette définition.

La technique la plus répandue pour l'évaluation de l'adhérence consiste à surveiller le glissement de chaque roue par rapport au glissement moyen de l'ensemble des roues, et à déduire le coefficient d'adhérence d'une loi expérimentale pré-établie, qui lie le coefficient d'adhérence au coefficient de glissement.

La mise en oeuvre de cette technique connue suppose non seulement l'utilisation de capteurs de rotation de roue sur chaque roue du véhicule, mais également un traitement numérique relativement important des mesures de rotation issues des capteurs. De plus, l'estimation ne peut être faite que lors de sollicitations importantes en longitudinal.

Un procédé conforme au préambule de la revendication 1 est divulgué par le document EP-A-323066.

Dans ce contexte, l'invention a pour but premier de proposer un procédé permettant d'évaluer l'adhérence des roues directrices d'un véhicule moyennant un traitement beaucoup plus simple que celui que requiert la technique précédemment évoquée, et lors de chaque virage.

A cette fin, le procédé de l'invention est conforme à la définition qu'en donne la revendication 1.

La puissance instantanée de braquage est une puissance électrique instantanée fournie par un moteur électrique d'assistance de braquage des roues directrices contrôlé au moyen d'un amplificateur opérationel à boucle de rétroaction recevant un signal électrique de consigne représentatif de la position instantanée de l'organe de pilotage. Le procédé comprend une procédure d'élaboration d'un vecteur de données, comprenant une mesure ou une évaluation de la vitesse instantanée du véhicule, une mesure ou une évaluation de la position instantanée de l'organe de pilotage, et une mesure ou une évaluation de la puissance instantanée de braquage, et une procédure de compilation consistant à produire l'évaluation du coefficient d'adhérence en tant qu'image du vecteur de données par une loi de correspondance préalablement mémorisée.

Ce procédé comprend avantageusement une procédure préalable de calibrage incluant des mesures directes et corrélées de l'adhérence, de la vitesse instantanée du véhicule, de la position instantanée de l'organe de pilotage, et de la puissance instantanée de braquage, et une procédure préalable de mémorisation incluant la mémorisation, en tant que loi de correspondance, d'un tenseur mettant en relation, pour chaque vecteur de données constitué par une mesure de la vitesse instantanée du véhicule, une mesure de la position instantanée de l'organe de pilotage, et une mesure de la puissance instantanée de braquage, la mesure corrélée d'adhérence issue de la procédure de calibrage.

La mesure ou l'évaluation de la puissance électrique instantanée de braquage s'effectue à partir du signal électrique présent sur l'entrée de rétroaction de l'amplificateur opérationnel.

Selon un second de ses aspects, l'invention concerne une application particulière de ce procédé, dans laquelle l'évaluation de l'adhérence des roues directrices d'un véhicule en entrée d'un virage est utilisée pour permettre l'évaluation de la puissance instantanée de braquage des roues directrices de ce véhicule en sortie de ce virage.

D'autres caractéristiques et avantages de l'invention ressortiront clairement de la description qui en est faite ci-après, à tire indicatif et nullement limitatif, en référence aux dessins annexés, dans lesquels :
- les figures 1 à 4 sont des schémas illustrant divers types de mécanismes de direction pour véhicules automobiles, assistés ou totalement mus par apport d'énergie électrique;
- la figure 5 est un schéma représentant le mode de contrôle connu d'un mécanisme de direction mû par une puissance électrique;
- la figure 6 est un diagramme représentant, pour une valeur fixe et unique de l'adhérence, et pour plusieurs valeurs de la vitesse instantanée d'un véhicule (correspondant aux différentes courbes illustrées), la puissance instantanée de braquage (en ordonnée) qui doit être appliquée aux roues directrices de ce véhicule pour que ces dernières prennent une orientation qui suit l'angle de volant (en abscisse); et
- la figure 7 est un schéma représentant la mise en oeuvre du procédé de l'invention dans le cas où la puissance instantanée de braquage est une puissance électrique.

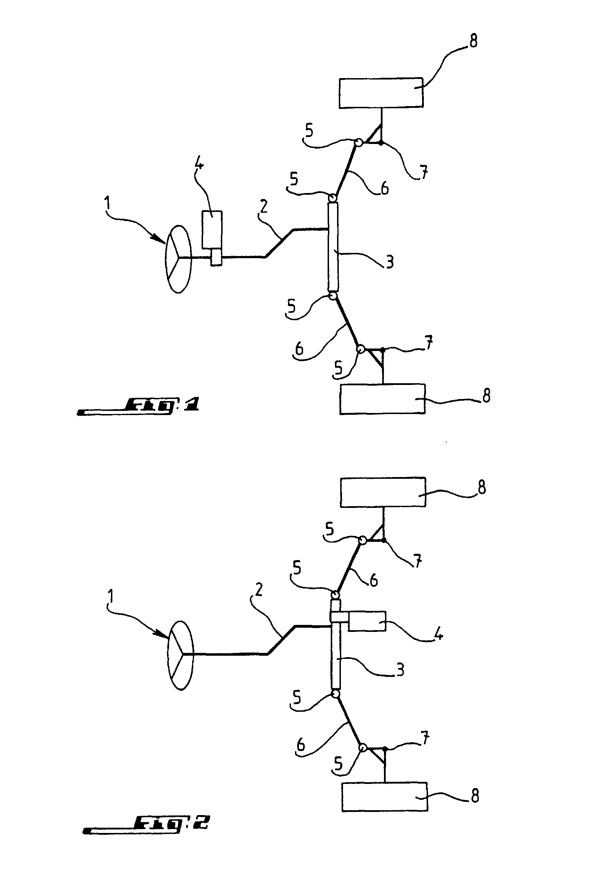

L'invention, qui fait intervenir le mécanisme de direction d'un véhicule automobile, est notamment utilisable sur les véhicules dotés de mécanismes de direction tels qu'illustrés aux figures 1 à 4, et dans lesquels la référence 1 désigne le volant du véhicule, la référence 2 la colonne de direction, la référence 3 la crémaillère, la référence 4 un moteur électrique, les références 5 les rotules de biellettes, les références 6 les biellettes, les références 7 les pivots de roues directrices, et les références 8 les roues directrices.

Dans le type de mécanisme de la figure 1, le braquage des roues 8 est assisté par un moteur électrique 4 implanté sur la colonne de direction 2 et commandé en fonction d'un signal émis par un capteur également implanté dans cette colonne 2.

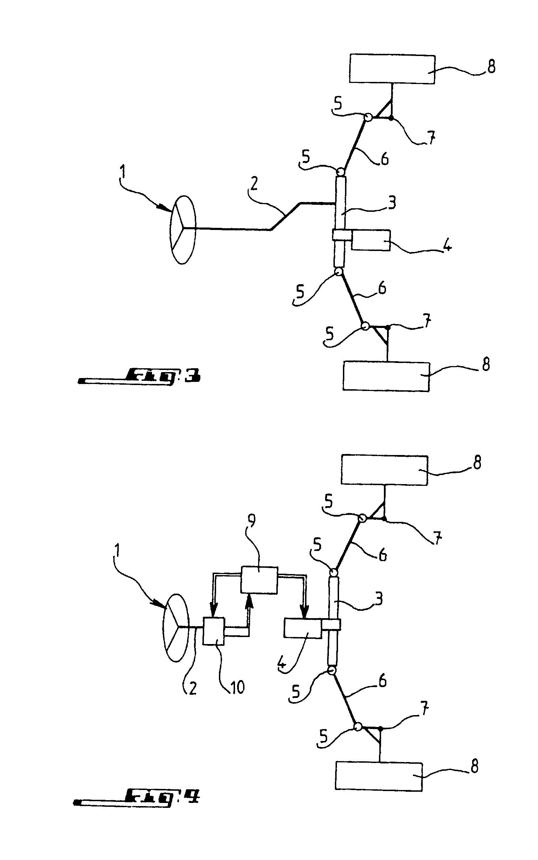

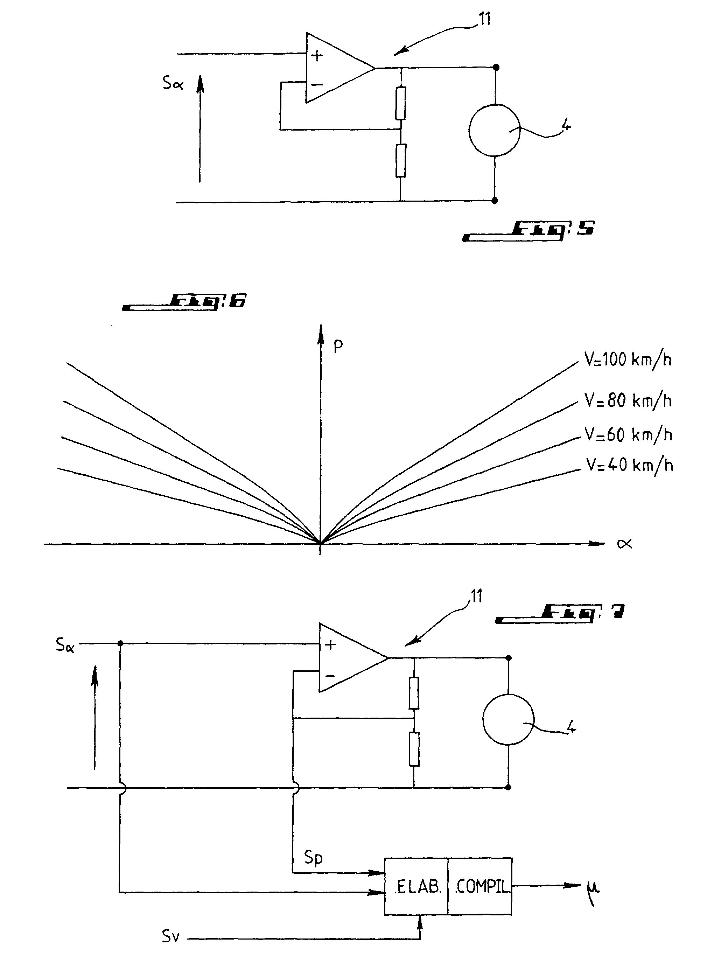

Les types de mécanisme des figures 2 et 3 sont fonctionnellement équivalents au type illustré à la figure 1, dont ils ne se distinguent que par l'emplacement d'implantation du moteur électrique 4. Ainsi, la figure 2 montre que le moteur électrique 4 est implanté sur le pignon de crémaillère tandis que la figure 3 montre que le moteur électrique 4 est implanté sur la crémaillère à côté du pignon de crémaillère.

Dans les types de mécanismes de direction illustrés aux figures 1 à 3, une partie de la puissance nécessaire au braquage des roues 8 est donc fournie par le conducteur du véhicule en tournant le volant 1.

Le type de mécanisme illustré à la figure 4 se distingue des précédents par l'absence de colonne de direction 2.

Le moteur électrique 4, qui est par exemple implanté sur la crémaillère 3, n'a plus alors pour simple fonction d'assister l'effort de braquage transmis par le volant 1, mais est piloté par un calculateur 9 de manière à développer à lui seul l'intégralité de l'effort nécessaire pour braquer les roues 8, en fonction des indications du capteur 10 de rotation du volant 1.

Dans tous les cas, le volant 1 adopte, sous le contrôle du conducteur du véhicule, une position instantanée de commande qui détermine l'orientation instantanée que prennent les roues directrices 8, ou qui, pour le moins, participe à la détermination de cette orientation.

Néanmoins, le changement d'orientation des roues 8 suppose d'appliquer à ces dernières une puissance instantanée suffisante pour vaincre les forces qui s'opposent à ce changement d'orientation.

Dans les cas illustrés aux figures 1 à 4, cet apport de puissance est assuré par le moteur électrique 4, le contrôle de ce moteur 4 étant lui-même réalisé au moyen d'un amplificateur 11 à boucle de rétroaction (figure 5), recevant le signal électrique de consigne Sα délivré par le capteur 10 de rotation du volant, ou un signal électrique élaboré à partir de celui que délivre ce capteur.

Comme le montre schématiquement la figure 7, le procédé de l'invention, considéré dans sa phase d'exploitation, comprend essentiellement une procédure d'élaboration ELAB, et une procédure de compilation COMPIL.

La procédure d'élaboration ELAB comprend une mesure ou une évaluation S_{V} de la vitesse instantanée V du véhicule, une mesure ou une évaluation Sα de la position instantanée α du volant 1, et une mesure ou une évaluation Sₚ de la puissance instantanée P nécessaire au braquage ds roues 8, la procédure ELAB consistant ainsi à élaborer un vecteur de données (Sᵥ, Sα, Sₚ).

La donnée Sᵥ est aisément obtenue en tant que signal électrique de sortie du capteur de vitesse du véhicule.

La donnée Sα est un signal électrique fourni par un capteur de rotation du volant, tel que le capteur 10 de la figure 4, et pouvant être appliqué directement au circuit d'asservissement du moteur électrique d'assistance de direction 4.

La donnée Sp est par exemple directement fournie, dans le cas d'un mécanisme de direction à commande électrique, par le signal présent sur l'entrée de rétroaction "-" de l'amplificateur opérationnel 11 (figures 5 et 7). Plus précisément, le signal électrique sous forme de tension électrique représentatif de la donnée Sα et provenant du capteur de rotation du volant, est appliqué en tant que valeur de consigne à l'entrée du circuit d'asservissement du moteur électrique 4, c'est-à-dire entre l'entrée "+" de l'amplificateur opérationnel 11 et l'une des bornes du moteur électrique 4. Le signal représentatif de la puissance électrique du moteur 4 et asservi à la valeur de consigne d'entrée est alors immédiatement disponible sur l'entrée de rétroaction "-" de l'amplificateur opérationnel 11 et correspond à la puissance instantanée P de braquage des roues directrices. Ainsi, en utilisant les valeurs de courant du moteur électrique d'asservissement de la direction, aucun capteur particulier n'est nécessaire pour fournir un signal représentatif de la puissance instantanée de braquage des roues directices, seuls les capteurs de rotation du volant et de vitesse du véhicule habituellement présents dans celui-ci étant utilisés. Ceci a pour avantage de réduire considérablement les coûts des moyens accomplissant cette fonction de mesure de puissance instantanée de braquage des roues directrices.

La procédure de compilation COMPIL exploite le vecteur de données (Sᵥ, Sα, Sₚ) pour produire l'évaluation du coefficient d'adhérence µ au moyen d'une loi de correspondance F préalablement mémorisée et répondant à la définition : µ = F(Sᵥ, Sα, Sₚ).

Dans la mesure où les données Sᵥ, Sα, et Sₚ ne sont pas nécessairement liées aux grandeurs physiques V, α, et P qu'elles représentent respectivement par une relation d'identité, mais éventuellement par des relations, en toute hypothèse connues, telles que des facteurs d'échelle, la loi de correspondance F est équivalente à une autre loi de correspondance G répondant à la définition : µ = G(V, α, P) et qu'illustre la figure 6 pour une valeur déterminée de µ.

La loi de correspondance F peut être déterminée par une procédure préalable de calibrage, réalisée avec un véhicule représentatif de la classe de véhicules auxquels la loi F sera applicable, et au cours de laquelle sont effectuées des mesures directes et corrélées µ, Sᵥ, Sα, et Sₚ de l'adhérence µ de ce véhicule en mouvement, de la vitesse instantanée V de ce véhicule, de la position instantanée α du volant 1 de ce véhicule, et de la puissance instantanée P de braquage des roues 8.

Le tenseur (µ, Sᵥ, Sα, et Sₚ) ainsi obtenu, qui relie entre elles les mesures µ, Sᵥ, Sα, et Sₚ, est ensuite mémorisé pour constituer la loi de correspondance F ultérieurement utilisable par la procédure de compilation COMPIL.

Le procédé de l'invention est applicable chaque fois qu'une évaluation globale de l'adhérence µ est requise sur une voie de circulation non rectiligne.

Cependant, ce procédé est particulièrement applicable à l'évaluation de la puissance instantanée de braquage qui doit être appliquée, en sortie de virage, aux roues directrices d'un véhicule utilisant le mécanisme de direction électrique à moteur électrique asservi comme on l'a vu précedemment.

En effet, lorsqu'un véhicule, après son entrée dans un virage, sort de ce dernier, il est nécessaire de transmettre aux roues directrices 8 un effort d'orientation qui est fonction de l'effort exercé lors de l'entrée du véhicule dans le virage, donc fonction de l'adhérence µ.

Le procédé de l'invention, qui permet d'évaluer l'adhérence µ des roues directrices 8 sur la voie lors de l'entrée du véhicule dans le virage, permet donc aussi la réutilisation de l'évaluation de cette adhérence pour la détermination de l'effort d'orientation à appliquer aux roues 8 pour la sortie du virage.

## Revendications

1. Procédé d'évaluation de l'adhérence (µ) des roues directrices (8) d'un véhicule sur une voie de circulation sur laquelle ce véhicule roule à une vitesse instantanée (V) déterminée, ce véhicule étant piloté au moyen d'un organe de pilotage (1), tel qu'un volant, adoptant une position instantanée de commande (α) dont dépend une orientation instantanée des roues directrices (8), cette orientation étant modifiable par application aux roues directrices d'une puissance instantanée de braquage (P), procédé selon lequel la puissance instantanée de braquage est une puissance électrique instantanée fournie par un moteur électrique (4) d'assistance de braquage des roues directrices et qui comprend une procédure d'élaboration (ELAB) d'un vecteur de données ((Sᵥ, Sα, Sₚ)), comprenant une mesure ou une évaluation (Sᵥ) de la vitesse instantanée (V) du véhicule, une mesure ou une évaluation (Sα) de la position instantanée (α) de l'organe de pilotage (1), et une mesure ou une évaluation (Sₚ) de la puissance électrique instantanée de braquage (P), et une procédure de compilation (COMPIL) consistant à produire l'évaluation du coefficient d'adhérence (µ) en tant qu'image du vecteur de données ((Sᵥ, Sα, Sₚ)) par une loi de correspondance (F) préalablement mémorisée, **caractérisé en ce que** le moteur électrique (4) d'assistance de braquage des roues directrices est contrôlé au moyen d'un amplificateur opérationnel (11) à boucle de rétroaction recevant un signal électrique de consigne représentatif de la position instantanée de l'organe de pilotage (1) et **en ce que** la mesure ou l'évaluation (Sₚ) de la puissance électrique instantanée de braquage (P) s'effectue à partir du signal électrique présent sur l'entrée de rétroaction de l'amplificateur opérationnel (11).

2. Procédé d'évaluation suivant la revendication 1, **caractérisé en ce qu'**il comprend une procédure préalable de calibrage incluant des mesures directes et corrélées (µ, Sᵥ, Sα, Sₚ) de l'adhérence (µ), de la vitesse instantanée (V) du véhicule, de la position instantanée (α) de l'organe de pilotage (1), et de la puissance instantanée (P) de braquage, et une procédure préalable de mémorisation incluant la mémorisation, en tant que loi de correspondance, d'un tenseur ( (µ, Sᵥ, Sα, et Sₚ) ) mettant en relation, pour chaque vecteur de données ((Sᵥ, Sα, Sₚ)) constitué par une mesure de la vitesse instantanée du véhicule, une mesure de la position instantanée de l'organe de pilotage, et une mesure de la puissance instantanée de braquage, la mesure (µ) corrélée d'adhérence issue de la procédure de calibrage.

3. Procédé d'évaluation selon la revendication 1 ou 2, **caractérisé en ce que** la mesure de la vitesse instantanée (V) du véhicule est effectuée à partir du signal de sortie d'un capteur de vitesse du véhicule et la mesure de la position instantanée de l'organe de pilotage (1) constitué par un volant de direction est effectuée à partir d'un capteur de rotation de ce volant.

4. Application du procédé d'évaluation suivant l'une des revendications précédentes à l'évaluation de la puissance instantanée de braquage des roues directrices d'un véhicule en sortie de virage sur la base de l'évaluation de l'adhérence des roues directrices de ce véhicule en entrée de virage.

## Patentansprüche

1. Verfahren zum Bestimmen der Bodenhaftung (µ) der gelenkten Räder (8) eines Fahrzeugs auf einer Fahrbahn, auf der dieses Fahrzeug mit einer bestimmten momentanen Geschwindigkeit (V) fährt, wobei dieses Fahrzeug über ein Steuermittel (1), wie etwa ein Lenkrad, gesteuert wird, das eine momentane Steuerstellung (α) einnimmt, von der eine momentane Ausrichtung der gelenkten Räder (8) abhängt, wobei diese Ausrichtung durch Aufbringen einer momentanen Lenkkraft (P) auf die zu lenkenden Räder veränderbar ist, bei welchem Verfahren die momentane Lenkkraft eine momentane elektrische Kraft ist, die von einem Elektromotor (4) zur Lenkunterstützung der gelenkten Räder geliefert wird, und einen Prozess (ELAB) zum Erstellen eines Vektors von Daten ((Sᵥ, Sα, Sₚ)) umfasst, der eine Messung bzw. Bestimmung (Sᵥ) der momentanen Geschwindigkeit (V) des Fahrzeugs, eine Messung bzw. Bestimmung (Sα) der momentanen Stellung (α) des Steuermittels (1) und eine Messung bzw. Bestimmung (Sₚ) der momentanen elektrischen Lenkkraft (P) umfasst, sowie einen Kompilierungsprozess (COMPIL), der darin besteht, die Bestimmung des Haftreibbeiwerts (µ) als Abbild des Datenvektors ((Sᵥ, Sα, Sₚ)) durch eine zuvor abgespeicherte Verknüpfungsregel (F) darzustellen, **dadurch gekennzeichnet, dass** der Elektromotor (4) zur Lenkunterstützung der gelenkten Räder über einen Operationsverstärker (11) mit Rückkopplungsschleife gesteuert wird, der ein elektrisches Sollsignal empfängt, welches repräsentativ ist für die momentane Stellung des Steuermittels (1), und das die Messung bzw. Bestimmung (Sp) der momentanen elektrischen Lenkkraft (P) ausgehend von dem elektrischen Signal erfolgt, das am Rückkopplungseingang des Operationsverstärkers (11) ansteht.

2. Verfahren zum Bestimmen nach Anspruch 1, **dadurch gekennzeichnet, dass** es einen vorangehenden Kalibrierungsprozess umfasst, der direkte und abgeleitete Messungen (µ, Sᵥ, Sα, Sₚ) der Haftung (µ), der momentanen Geschwindigkeit (V) des Fahrzeugs, der momentanen Stellung (α) des Steuermittels (1) und der momentanen Lenkkraft (P) einschließt, sowie einen vorangehenden Speicherungsprozess, der das Abspeichern eines Tensors ((µ, Sᵥ, Sα und Sₚ)) als Verknüpfungsregel einschließt, der für jeden aus einer Messung der momentanen Geschwindigkeit des Fahrzeugs bestehenden Datenvektor ((Sᵥ, Sα, Sₚ)) eine Messung der momentanen Stellung des Steuermittels und eine Messung der momentanen Lenkkraft in Bezug zueinander setzt, wobei die abgeleitete Messung (µ) der Haftung aus dem Kalibrierungsprozess stammt.

3. Verfahren zum Bestimmen nach Anspruch 1 oder 2, **dadurch gekennzeichnet, dass** die Messung der momentanen Geschwindigkeit (V) des Fahrzeugs ausgehend von dem Ausgangssignal eines Fahrzeuggeschwindigkeitssensors und die Messung der momentanen Stellung des aus einem Lenkrad bestehenden Steuermittels (1) ausgehend von einem Drehsensor dieses Lenkrads erfolgt.

4. Anwendung des Bestimmungsverfahrens nach einem der vorangehenden Ansprüche zum Bestimmen der momentanen Lenkkraft der gelenkten Räder eines Fahrzeugs bei Kurvenbeendigung auf Basis der Bestimmung der Haftung der gelenkten Räder dieses Fahrzeugs bei Kurvenbeginn.

## Claims

1. Method for evaluating the adherence (µ) of the steered wheels (8) of a vehicle on a road surface on which this vehicle is travelling at a given momentary speed (V), this vehicle being driven by a steering unit (1), such as a steering wheel, adopting a momentary control position (α) on which depends the momentary orientation of the steered wheels (8), this orientation being able to be changed by the application of a momentary locking force (P) to the steered wheels, a method in accordance with which the momentary locking force is a momentary electrical force supplied by a locking assistance electric motor (4) for the steered wheels and which comprises a processing procedure (ELAB) of a data vector ((S_{V}, S_{α}, S_{P})) comprising a measurement or an estimate (S_{V}) of the vehicle's momentary speed (V), a measurement or an estimate (S_{α}) of the momentary position (α) of the steering unit (1) and a measurement or an estimate (S_{P}) of the momentary electric locking force (P), and a compilation method (COMPIL) consisting in producing the adherence coefficient (µ) estimate as an image of the data vector ((S_{V}, S_{α}, S_{P})) by a previously stored correspondence law (F), **characterised in that** the locking assistance electric motor (4) for the steered wheels is controlled by means of a working amplifier (11) with a feedback loop receiving a representative electrical instruction signal for the steering unit (1) and **in that** the measurement or estimate (S_{P}) of the momentary electrical locking force (P) is effected using the electrical signal present on the feedback input of the working amplifier (11).

2. Evaluation method in accordance with claim 1, **characterised in that** it comprises a prior calibration process including direct and correlated measurements (µ, S_{V}, S_{α}, S_{P}) of adherence (µ), the vehicle's momentary speed (V), the momentary position (α) of the steering unit (1) and the momentary locking force (P) and a prior storage procedure including the storage, as a correspondence law, of a tensor ((µ, S_{V}, S_{α} and S_{P})) giving the relationship for the correlated adherence measurement (µ) arising from the calibration procedure for each data vector ((S_{V}, S_{α}, S_{P})) formed by a momentary speed measurement for the vehicle, a measurement of the momentary position of the steering unit and a measurement of the momentary locking force.

3. Evaluation method in accordance with claim 1 or 2, **characterised in that** the measurement of the vehicle's momentary speed (V) is taken from the output signal of a vehicle speed sensor and the measurement of the momentary position of the steering unit (1) formed by a steering wheel is taken from a rotation sensor on this steering wheel.

4. Application of the method in accordance with one of the previous claims for estimating the momentary locking force of the steered wheels of a vehicle exiting a comer on the basis of the estimate of the adherence of the steered wheels of this vehicle when entering the comer.
